(19) Europäisches Patentamt
European Patent Office
Office européen des brevets

(11) Veröffentlichungsnummer: **0 374 661**
**A1**

# (12) EUROPÄISCHE PATENTANMELDUNG

(21) Anmeldenummer: **89122781.1**

(51) Int. Cl.5: **C09B 62/26, D06P 1/382**

(22) Anmeldetag: **09.12.89**

(30) Priorität: **23.12.88 DE 3843558**

(43) Veröffentlichungstag der Anmeldung:
**27.06.90 Patentblatt 90/26**

(84) Benannte Vertragsstaaten:
**CH DE FR GB LI**

(71) Anmelder: **BAYER AG**

**D-5090 Leverkusen 1 Bayerwerk(DE)**

(72) Erfinder: **Schündehütte, Karl-Heinz, Prof.-Dr.**
**Klief 75**
**D-5090 Leverkusen(DE)**
Erfinder: **Groll, Manfred, Dr.**
**Paul-Klee-Strasse 68c**
**D-5090 Leverkusen(DE)**
Erfinder: **Stawitz, Josef Walter, Dr.**
**Am Hagen 1**
**D-5068 Odenthal-Gloebusch(DE)**

(54) **Reaktivfarbstoffe.**

(57) Neue Reaktivfarbstoffe der Formel

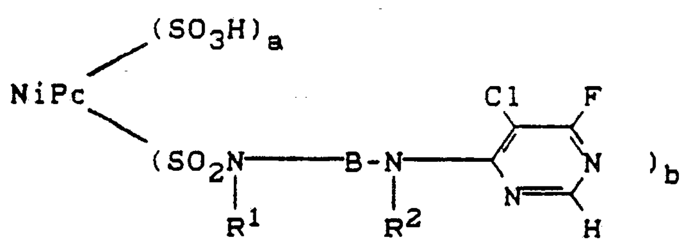

mit den in der Beschreibung angegebenen Substituentenbedeutungen eignen sich hervorragend zum Färben und Bedrucken von hydroxyl- und amidgruppenhaltigen Textilmaterialien. Sie liefern in hohen Ausbeuten Färbungen bzw. Drucke mit hohen Echtheiten.

EP 0 374 661 A1

## Reaktivfarbstoffe

Gegenstand der vorliegenden Erfindung sind Reaktivfarbstoffe der Formel

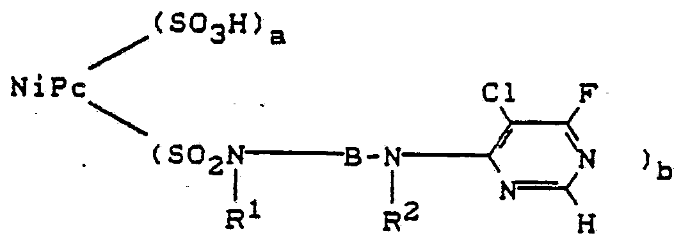

worin
NiPc = Rest eines Nickel-Phthalocyanins,
$R^1$, $R^2$ = unabhängig voneinander H, gegebenenfalls substituiertes $C_1$-$C_4$-Alkyl,
B = gegebenenfalls substituiertes Phenylen, $C_2$-$C_8$-Alkylen oder Phenyl-$C_1$-$C_4$-alkylen,
a = 1,5 bis 3,2, vorzugsweise 2,5 bis 3,1,
b = 1,5 bis 0,8, vorzugsweise 1,2 bis 0,9,
wobei a + b = 3 bis 4.

Jede der Sulfo- bzw. Sulfonamidgruppen ist an einen verschiedenen Benzolring des Phthalocyanins in 3- oder 4-Stellung gebunden.

Geeignete Reste $R^1$ und $R^2$ sind neben H beispielsweise auch durch OH, COOH, $OSO_3H$ oder $SO_3H$ substituiertes $C_1$-$C_4$-Alkyl wie Methyl, Ethyl, Propyl, ß-Hydroxyethyl, γ-Hydroxypropyl, ß-Carboxyethyl, ß-Sulfoethyl.

Geeignete Reste B sind insbesondere Phenylen, gegebenenfalls substituiert durch $C_1$-$C_4$-Alkyl, $C_1$-$C_4$-Alkoxy, Halogen, insbesondere Cl, Nitro, Cyan, COOH, $SO_3H$, Carbonamid, Sulfonamid, Acylamino, insbesondere $C_1$-$C_4$-Alkylcarbonylamino oder $-NHCONH_2$, $-CH_2CH_2-$, $-CH_2CH_2CH_2-$, $-CH_2-C_6H_5-$.

Beispielhaft seien folgende Reste B genannt:
1,2-Phenylen, 1,3-Phenylen, 1,4-Phenylen, 3-Methyl-1,4-phenylen, 2-Methyl-1,4-phenylen, 2-Methyl-5-chlor-1,4-phenylen, 4-Methoxy-1,3-phenylen, 3-Methoxy-1,4-phenylen, 4-Chlor-1,3-phenylen, 2-Chlor-1,4-phenylen, 5-Carbonamido-1,3-phenylen, 1,4-Phenylen-2-sulfonsäure, 1,3-Phenylen-4-sulfonsäure, 1,3-Phenylen-5-carbonsäure, 1,3-Phenylen-4-carbonsäure.

Bevorzugte Farbstoffe (I) sind solche mit
$R^1$, $R^2$ = H,
B = Phenylen, gegebenenfalls substituiert durch $C_1$-$C_4$-Alkyl, $C_1$-$C_4$-Alkoxy, Halogen,
a = 2,5 bis 3,1,
b = 0,9 bis 1,2.

Bevorzugte Farbstoffe (I) sind weiterhin solche mit
$R^1$, $R^2$ = H,
B = Sulfo- oder Carboxyphenylen, gegebenenfalls weiter substituiert durch $C_1$-$C_4$-Alkyl, $C_1$-$C_4$-Alkoxy, Halogen (Cl),
a = 2,5 bis 3,1,
b = 0,9 bis 1,2.

Besonders bevorzugte Farbstoffe (I) sind solche mit
$R^1$, $R^2$ = H,
B = Phenylen,
a = 2,5 bis 3,1,
b = 0,9 bis 1,2.

Die angegebenen Formeln sind die der freien Säure. Im allgemeinen werden die bei der üblichen Herstellung anfallenden Salze, insbesondere die Alkali- oder Ammoniumsalze eingesetzt.

Die Herstellung der Farbstoffe (I) erfolgt beispielsweise dadurch, daß man ein Nickel-Phthalocyaninsulfonsäurechlorid der Formel

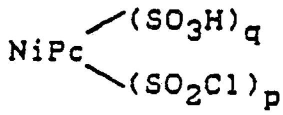

(II)

worin
NiPc = Rest eines Ni-Phthalocyanins,
q = 0,2 bis 2,0 und
p = 2,0 bis 3,8
mit 0,8 bis 1,2 Mol eines Amins der Formel

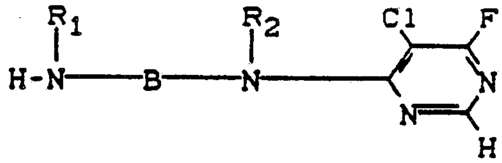

(III)

wobei
B, $R^1$, $R^2$ die für Formel (I) angegebene Bedeutung haben, umsetzt
und anschließend gegebenenfalls noch vorhandene Sulfonsäurechlorid-Gruppen verseift.

Amine der Formel (III) lassen sich leicht durch halbseitigen Umsatz des entsprechenden Diamins mit 4,6-Difluor-5-chlor-pyrimidin der Formel

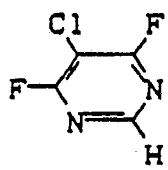

(IV)

bei 20 bis 35 °C in wäßriger Suspension herstellen.

Ein anderer Weg zur Herstellung der vorgenannten Farbstoffe besteht darin, daß man das Phthalocyanin-sulfonsäurechlorid der Formel (II) zunächst mit 0,8 bis 1,2 Mol eines Amins der Formel

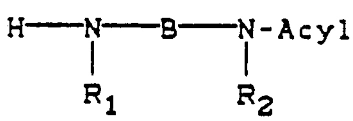

bzw.

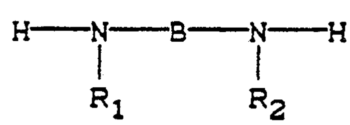

(V) (VI)

wobei
B, $R^1$, $R^2$ die für Formel (I) angegebene Bedeutung haben,
umsetzt, gegebenenfalls die Acylamino-Gruppe verseift und die erhaltene Farbbase mit 0,8 bis 1,2 Mol 4,6-Difluor-5-chlor-pyrimidin der Formel

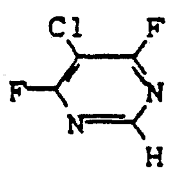

(IV)

umsetzt.

Die Herstellung der Ni-Phthalocyanin-sulfonsäurechloride der Formel (II) erfolgt durch Behandeln von Ni-Phthalocyanin in Chlorsulfonsäure bei etwa 130 bis 140 °C.

Als Amine der Formel (III) seien beispielsweise genannt:

4-(3-Aminophenyl)amino-5-chlor-6-fluor-pyrimidin,
4-(4-Aminophenyl)amino-5-chlor-6-fluor-pyrimidin,
4-(2-Aminophenyl)amino-5-chlor-6-fluor-pyrimidin,
4-(4-Methylaminophenyl)amino-5-chlor-6-fluor-pyrimidin,
4-(3-Amino-4-methylphenyl)amino-5-chlor-6-fluor-pyrimidin,
4-(4-Amino-3-chlorphenyl)amino-5-chlor-6-fluor-pyrimidin,
4-(3-Amino-phenyl-4-sulfonsäure)amino-5-chlor-6-fluor-pyrimidin,
4-(3-Amino-4-carboxyphenyl)amino-5-chlor-6-fluor-pyrimidin,
4-(4-Aminophenyl)methylamino-5-chlor-6-fluor-pyrimidin,
4-(2-Amino-ethyl)amino-5-chlor-6-fluor-pyrimidin,
4-(2-Methylamino-ethyl)methylamino-5-chlor-6-fluor-pyrimidin.

Als Beispiele für Amine der Formel (V) seien genannt:
4-Amino-formanilid, 3-Amino-formanilid, 2-Amino-acetanilid, 3-Amino-acetanilid, 4-Amino-acetanilid, 3-Aminophenyl-oxamidsäure, 4-Aminophenyl-oxamidsäure, N-(3-Aminophenyl)-2-hydroxy-acetamid, N-(4-Aminophenyl)-N-methyl-acetamid, N-(4-Aminophenyl)-N-methylformamid, N-(4-Aminophenyl)-N-ethylacetamid, N-(4-Amino-2,5-dichlorphenyl)-acetamid, N-(4-Amino-3-nitrophenyl)-acetamid, N-(5-Amino-2-methylphenyl)-formamid, N-(5-Amino-2-methylphenyl)-acetamid, N-(3-Amino-2-methylphenyl)-acetamid, N-(3-Amino-4-methylphenyl)-N-ethylacetamid, N-(4-Amino-3-methylphenyl)-acetamid, N-(2-Amino-4-methylphenyl)-acetamid, N-(Acetylamino)-2-aminobenzoesäure, 5-(Acetylamino)-2-aminobenzoesäure, Acetylethylendiamin.

Als Beispiele für Amine der Formel (VI) seien genannt:
1,3-Diaminobenzol, 1,4-Diaminobenzol, 1,3-Diaminobenzol-4-sulfonsäure, 1,4-Diaminobenzol-2- sulfonsäure, 1,3-Diaminobenzol-4-carbonsäure, 1,4- Diaminobenzol-2-carbonsäure, 2-Chlor-phenylendiamin-1,4, 2-Nitrophenylendiamin-1,4, N-Methylethylendiamin.

Die Umsetzung der Phthalocyanin-sulfonsäurechloride der Formel (II) mit den Aminen der Formeln (III), (V) und (VI) geschieht vorzugsweise in wäßriger Lösung bzw. Suspension bei Temperaturen von 0 bis 30° C und pH-Werten von 6 bis 11. Die Verseifung der Acylamino-Gruppe nach dem Umsatz von (II) mit (V) kann sowohl in saurem als auch in alkalischem Medium vorzugsweise bei Temperaturen von 70 bis 80° durchgeführt werden.

Der Umsatz der Farbbase mit dem Difluor-chlor-pyrimidin der Formel (IV) wird in wäßriger Lösung bei pH 6 bis 7 und 20° bis 35° C durchgeführt.

Setzt man ein Phthalocyanin-sulfonsäurechlorid der Formel (II) mit einem Amin der Formel (III) um, so ist es nicht notwendig von isoliertem Amin (III) auszugehen. Man kann vielmehr die beim halbseitigen Umsatz von Diamin mit 4,6-Difluor-5-chlor-pyrimidin anfallende Suspension von (III) für den Umsatz mit dem Phthalocyanin-sulfonsäurechlorid einsetzen.

Die neuen Farbstoffe eignen sich hervorragend zum Färben und Bedrucken hydroxyl- und amidgruppenhaltiger Textilmaterialien, beispielsweise solchen aus Cellulose, Wolle oder synthetischen Polyamiden. Ihre Anwendung erfolgt nach üblichen Methoden.

In den folgenden Beispielen bedeuten die Teile Gewichtsteile und die Grade Celsiusgrade.

Beispiel 1

57,5 Teile Nickel-Phthalocyanin 99 %ig werden in 257 Teilen Chlorsulfonsäure 8 Stunden bei 136 bis 138° C gerührt. Die Schmelze wird auf 25° gekühlt und - gegebenenfalls nach Verdünnen mit etwas Chlorsulfonsäure - auf Eis ausgetragen, wobei man die Temperatur +3° nicht überschreiten soll. Die Suspension wird abgesaugt und mit 1600 Teilen Eiswasser, dem 150 Teile Salzsäure 30 %ig zugesetzt sind, gewaschen.

Das Nutschgut wird in 1000 Teilen Eiswasser angeschlagen und 15 Minuten verrührt. Man rührt 26,5 Teile 4-Fluor-5-chlor-6-(3-aminophenyl)amino-pyrimidin ein. Durch Zugabe von Natronlauge wird der pH-Wert der Suspension in 90 Minuten auf 9,0 gestellt, wobei gleichzeitig die Temperatur auf 23° erhöht wird. Man rührt bei pH 9 und 20 bis 24° bis zur Beendigung der Reaktion. Der Farbstoff wird ausgesalzen, kurz bei pH 7 nachgerührt, abgesaugt und mit verdünnter NaCl-Lösung mehrmals abgedeckt. Der Farbstoff wird bei 60° getrocknet. Er entspricht in Form seiner freien Säure der Formel

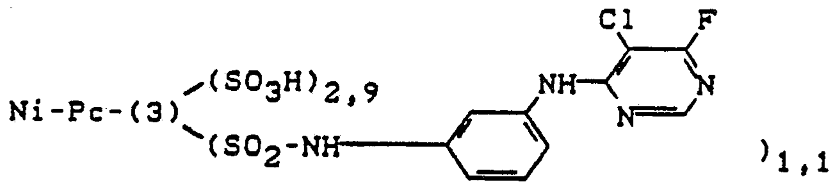

Der Farbstoff färbt Baumwolle in äußerst wasch- und lichtechten blaustichigen Grüntönen, wobei die optimale Färbetemperatur bei 80° liegt.

Zu Farbstoffen mit ähnlichen Eigenschaften gelangt man, wenn man die in Absatz 2 genannten 26,5 Teile 4-Fluor-5-chlor-6-(3-aminophenyl)amino-pyrimidin durch die äquivalente Menge 4-Fluor-5-chlor-6-(4-aminophenyl)amino-pyrimidin oder die äquivalente Menge 4-Fluor-5-chlor-6-(4-aminophenyl)methylamino-pyrimidin ersetzt.

Beispiel 2

57,5 Teile Nickelphthalocyanin 99 %ig werden in 257 Teilen Chlorsulfonsäure 8 Stunden bei 136 bis 138° gerührt. Die Schmelze wird auf 25° gekühlt und - gegebenenfalls nach Verdünnen mit etwas Chlorsulfonsäure - auf Eis ausgetragen, wobei man die Temperatur +3° nicht überschreiten soll. Die Suspension wird abgesaugt und mit 1600 Teilen Eiswasser, dem 150 Teile Salzsäure 30 %ig zugesetzt sind, gewaschen.

Das Nutschgut wird in 500 ml Eiswasser angeschlagen und 15 Minuten bei 0 bis 3° gerührt. Nun werden 32 Teile 3-Amino-acetanilid · Hydrochlorid (51,6 %ig) eingerührt. Man stellt den pH-Wert der Suspension in 90 Minuten auf pH 10 und steigert die Temperatur gleichzeitig auf 24°. Man rührt bis zur Beendigung der Reaktion bei pH 10, steigert die Temperatur auf 70°, wobei man den pH auf 9,0 abfallen läßt. Zur Verseifung der Acetylamino-Gruppe rührt man 276 Teile Natronlauge 30,7 %ig ein und verseift 6 Stunden bei 72°. Die Farbbase wird durch Zugabe von Salzsäure ausgefällt, abgesaugt und kurz mit verdünnter Salzsäure gewaschen.

Die Paste der Farbbase wird nach gutem Trockenpressen in 1500 ml Wasser bei pH 7 gelöst. Nun läßt man bei 26 bis 30° innerhalb von 10 Minuten unter Einhalten eines pH-Wertes von 6,5 bis 7,0 17,5 Teile 4,6-Difluor-5-chlor-pyrimidin (in geschmolzenem Zustand) zutropfen. Man rührt unter Einhalten des pH-Wertes von 6,5 bis 7,0 bis zur Beendigung der Reaktion bei 30 bis 40° nach. Anschließend wird auf 20 bis 25° gekühlt und der Farbstoff durch langsame Zugabe von 500 Teilen NaCl-Lösung ausgefällt. Der Farbstoff wird abgesaugt, kurz mit verdünnter NaCl-Lösung gewaschen und bei 50 bis 60° getrocknet. Der in nahezu quantitativer Ausbeute erhaltene Farbstoff entspricht in Form seiner freien Säure der Formel

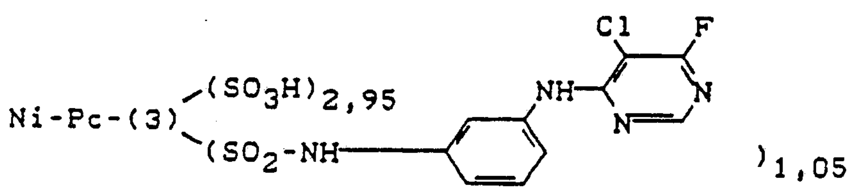

Er färbt Baumwolle in sehr wasch- und lichtechten blaustichigen Grüntönen, wobei die optimale Färbetemperatur bei 80° liegt.

Beispiel 3

57,5 Teile Nickel-Phthalocyanin 99 %ig werden in 180 Teilen Chlorsulfonsäure 8 Stunden bei 136 bis 138° gerührt. Die Schmelze wird auf 25° gekühlt und - gegebenenfalls nach Verdünnen mit etwas Chlorsulfonsäure - auf Eis ausgetragen, wobei die Temperatur +3° nicht überschritten werden soll. Die Suspension wird abgesaugt und mit 1600 Teilen Eiswasser, dem 150 Teile Salzsäure 30 %ig zugesetzt sind, gewaschen.

Das Nutschgut wird in 1000 Teilen Eiswasser angeschlagen und 15 Minuten verrührt. Man rührt 21,5

Teile 4-Fluor-5-chlor-6-(3-aminophenyl)amino-pyrimidin ein. Durch Zugabe von Natronlauge wird der pH-Wert der Suspension in 90 Minuten auf 10,0 gestellt. Man rührt 2 Stunden bei 0-5° C und pH 10, läßt auf 20° C erwärmen und rührt bei pH 10 und 20 bis 24° bis zur Beendigung der Reaktion. Der Farbstoff wird ausgesalzen, kurz bei pH 7 nachgerührt, abgesaugt und mit verdünnter NaCl-Lösung abgedeckt. Der Farbstoff wird bei 60° getrocknet. Er entspricht in Form seiner freien Säure der Formel

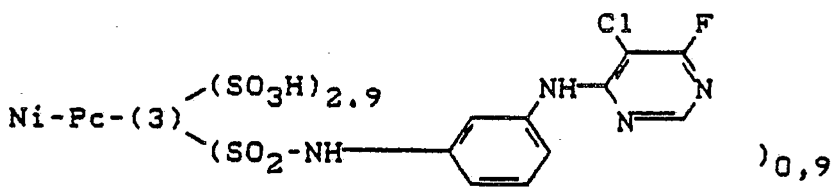

Er färbt Baumwolle in äußerst licht- und waschechten Grüntönen, wobei die optimale Färbetemperatur bei 80° liegt.

Zu Farbstoffen mit ähnlichen Eigenschaften gelangt man, wenn man die in Absatz 2 genannten 21,5 Teile 4-Fluor-5-chlor-6-(3-aminophenyl)amino-pyrimidin durch die äquivalente Menge 4-Fluor-5-chlor-6-(3-chlor-4-aminophenyl)amino-pyrimidin oder die äquivalente Menge 4-Fluor-5-chlor-6-(3-amino-4-methylphenyl)amino-pyrimidin ersetzt.

## Ansprüche

1. Reaktivfarbstoffe der Formel

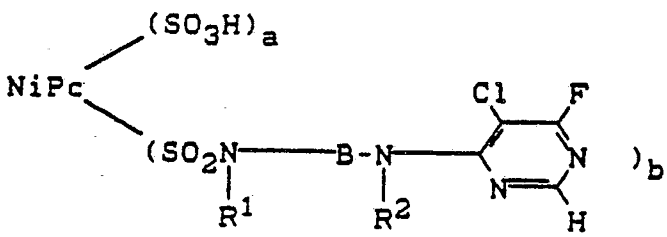

worin
NiPc = Rest eines Nickel-Phthalocyanins,
$R^1$, $R^2$ = H, gegebenenfalls substituiertes $C_1$-$C_4$-Alkyl,
B = gegebenenfalls substituiertes Phenylen, $C_2$-$C_8$-Alkylen oder Phenyl-$C_1$-$C_4$-alkylen,
a = 1,5 bis 3,2, vorzugsweise 2,5 bis 3,1,
b = 1,5 bis 0,8, vorzugsweise 1,2 bis 0,9,
wobei a + b = 3 bis 4.

2. Farbstoffe des Anspruchs 1 mit
$R^1$, $R^2$ = H,
B = Phenylen, gegebenenfalls substituiert durch $C_1$-$C_4$-Alkyl, $C_1$-$C_4$-Alkoxy, Halogen,
a = 2,5 bis 3,1,
b = 1,2 bis 0,9.

3. Farbstoffe des Anspruchs 1 mit
$R^1$, $R^2$ = H,
B = Sulfo- oder Carboxyphenylen, gegebenenfalls weiter substituiert durch $C_1$-$C_4$-Alkyl, $C_1$-$C_4$-Alkoxy, Halogen,
a = 2,5 bis 3,1,
b = 1,2 bis 0,9.

4. Farbstoffe des Anspruchs 1 mit
$R^1$, $R^2$ = H,
B = Phenylen,
a = 2,5 bis 3,1,
b = 1,2 bis 0,9.

5. Verwendung der Farbstoffe der Ansprüche 1 bis 4 zum Färben und Bedrucken von hydroxyl- und amidgruppenhaltigen Textilmaterialien.

Europäisches Patentamt

# EUROPÄISCHER RECHERCHENBERICHT

Nummer der Anmeldung

EP 89 12 2781

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 570 565 (BAYER)<br>* Zusammenfassung A, Punkte 1,3,5c; Beispiel 7 *<br>----- | 1-5 | C 09 B 62/26<br>D 06 P 1/382 |
| | | | **RECHERCHIERTE SACHGEBIETE (Int. Cl.5)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 20-03-1990 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)